# EUROPEAN PATENT APPLICATION

(11) **EP 4 597 690 A1**
(43) Date of publication of application: **06.08.2025**
(21) Application number: 23869581.1
(22) Date of filing: 25.04.2023
(51) Int. Cl.: H01M 10/615, B60L 58/27, H01M 10/625

(54) **BATTERY SELF-HEATING CIRCUIT, AND VEHICLE**

(30) Priority: 29.09.2022 CN 202222636478 U
(71) Applicant: BYD Company Limited, Shenzhen, Guangdong 518118 (CN)
(72) Inventor: LING, Heping, Shenzhen, Guangdong 518118 (CN); LAN, Yunwei, Shenzhen, Guangdong 518118 (CN); ZHANG, Junwei, Shenzhen, Guangdong 518118 (CN); YAN, Lei, Shenzhen, Guangdong 518118 (CN); MENG, Guoqiang, Shenzhen, Guangdong 518118 (CN)
(74) Representative: Mathys & Squire
(86) International application number: PCT/CN2023/090699
(87) International publication number: WO 2024/066325

(57) **Abstract**

A battery self-heating circuit, comprising a first battery group, a second battery group, a first capacitor, a second capacitor, multiple phases of bridge arms, and multiple phase of windings, which correspond to the multiple phases of bridge arms on a one-to-one basis, wherein each phase of winding is connected to the midpoint of a corresponding bridge arm; a negative electrode of the first battery group is connected to a positive electrode of the second battery group, and the negative electrode of the first battery group and the positive electrode of the second battery group are connected to a neutral point of the multiple phases of windings; a positive electrode of the first battery group is connected to a first bus terminal of the multiple phases of bridge arms, and a negative electrode of the second battery group is connected to a second bus terminal of the multiple phases of bridge arms; and a first end of the second capacitor is connected to a second end of the first capacitor, the first end of the second capacitor and the second end of the first capacitor are connected to the neutral point of the multiple phases of windings, a second end of the second capacitor is connected to the negative electrode of the second battery group, and a first end of the first capacitor is connected to the positive electrode of the first battery group.

## Description

### CROSS-REFERENCE TO RELATED APPLICATIONS

The present disclosure claims priority to and benefits of Chinese Patent Application No. 202222636478.6, filed on September 29, 2022 and entitled "BATTERY SELF-HEATING CIRCUIT, AND VEHICLE". The entire content of the above-referenced application is incorporated herein by reference.

### FIELD

The present disclosure relates to the field of battery self-heating technologies, and specifically, to a battery self-heating circuit and a vehicle.

### BACKGROUND

In the related art, a battery self-heating technology is usually applied to a battery pack for self-heating. The battery self-heating technology uses circulative charging and discharging of a battery, and relies on the internal resistance of the battery to generate heat. The battery self-heating technology has advantages of fast heating speed, high heating efficiency, good temperature uniformity, and low costs, but also increases noise interference during self-heating.

### SUMMARY

An objective of the present disclosure is to provide a battery self-heating circuit and a vehicle, to solve problems in the related art.

To achieve the foregoing objective, according to a first aspect of the embodiments of the present disclosure, a battery self-heating circuit is provided, including a first battery group, a second battery group, a first capacitor, a second capacitor, multiple phase bridge arms, and multiple phase windings in one-to-one correspondence with the multiple phase bridge arms, where each phase winding is connected to a midpoint of a corresponding bridge arm.

A negative electrode of the first battery group is connected to a positive electrode of the second battery group, and the negative electrode of the first battery group and the positive electrode of the second battery group are connected to a neutral point of the multiple phase windings.

A positive electrode of the first battery group is connected to a first bus end of the multiple phase bridge arms, and a negative electrode of the second battery group is connected to a second bus end of the multiple phase bridge arms.

A first end of the second capacitor is connected to a second end of the first capacitor, the first end of the second capacitor and the second end of the first capacitor are connected to the neutral point of the multiple phase windings; a second end of the second capacitor is connected to the negative electrode of the second battery group, and a first end of the first capacitor is connected to the positive electrode of the first battery group.

Optionally, the battery self-heating circuit further includes a first switch, and the first end of the second capacitor and the second end of the first capacitor are connected to the neutral point of the multiple phase windings through the first switch.

Optionally, the first switch is a contactor.

Optionally, the battery self-heating circuit further includes a second switch, and the negative electrode of the first battery group and the positive electrode of the second battery group are connected to the neutral point of multiple phase windings through the second switch.

Optionally, the multiple phase bridge arms is a three-phase bridge arm, and the multiple phase windings is a three-phase winding.

Optionally, multiple phase coils of a motor are reused as the multiple phase windings, and multiple phase bridge arms of a motor controller are reused as the multiple phase bridge arms.

Optionally, the motor includes a drive motor or an air conditioner compressor, and the motor controller includes a motor controller corresponding to the drive motor or a motor controller corresponding to the air conditioner compressor.

Optionally, the battery self-heating circuit further includes a DC charging port, the neutral point of the multiple phase windings is connected to a positive electrode of the DC charging port, and the second bus end of the multiple phase bridge arms is connected to a negative electrode of the DC charging port. The multiple phase windings and the multiple phase bridge arms form a boost circuit, and the boost circuit is configured to: boost a direct current of the DC charging port, and then charge the first battery group and the second battery group.

Optionally, a capacitance of the first capacitor is the same as a capacitance of the second capacitor.

Optionally, the capacitance of the first capacitor and the capacitance of the second capacitor are both less than 10 µF.

According to a second aspect of the present disclosure, a vehicle is further provided, including the foregoing battery self-heating circuit.

The present disclosure provides a battery self-heating circuit and a vehicle. The circuit includes a first battery group, a second battery group, a first capacitor, a second capacitor, multiple phase bridge arms, and multiple phase windings in one-to-one correspondence with the multiple phase bridge arms. Each phase winding is connected to a midpoint of a corresponding bridge arm. The first battery group and the multiple phase windings cooperate to charge and discharge to implement self-heating of the first battery group; because a first end of the first capacitor is connected to a positive electrode of the first battery group, and a second end of the first capacitor is connected to a neutral point of the multiple phase windings, which is equivalent to that the first capacitor is connected in parallel with the first battery group, the first capacitor can perform filtering and noise reduction during the self-heating of the first battery group. The second battery group and the multiple phase windings cooperate to charge and discharge to implement self-heating of the second battery group; because a first end of the second capacitor is connected to the neutral point of the multiple phase windings, and a second end of the second capacitor is connected to a negative electrode of the second battery group, which is equivalent to that the second capacitor is connected in parallel with the second battery group, the second capacitor can perform filtering and noise reduction during the self-heating of the second battery group. In this way, noise reduction of self-heating of the battery pack is implemented.

Other features and advantages of the present disclosure will be described in detail in the following detailed description part.

### BRIEF DESCRIPTION OF THE DRAWINGS

The accompanying drawings are provided to further understand the present disclosure, and constitute a part of the specification. The accompanying drawings, along with the specific implementations, are used to explain the present disclosure, and pose no limitation on the present disclosure. In the figures:
FIG. 1 is a circuit diagram of a battery self-heating circuit according to an embodiment of the present disclosure;
FIG. 2 is a circuit diagram of another battery self-heating circuit according to an embodiment of the present disclosure;
FIG. 3 is a circuit diagram of another battery self-heating circuit according to an embodiment of the present disclosure;
FIG. 4 is a circuit diagram of another battery self-heating circuit according to an embodiment of the present disclosure;
FIG. 5 is a circuit diagram of another battery self-heating circuit according to an embodiment of the present disclosure;
FIG. 6 is a circuit diagram of another battery self-heating circuit according to an embodiment of the present disclosure; and
FIG. 7 is a circuit diagram of another battery self-heating circuit according to an embodiment of the present disclosure.

### In the drawings:

110-First battery group; 120-second battery group; 130-multiple phase bridge arms; 131-first bridge arm; 132-second bridge arm; 133-third bridge arm; 140-multiple phase windings; C1-first capacitor; C2-second capacitor; C3-third capacitor; C4-fourth capacitor; K1-first switch; K2-second switch; K3-third switch; K4-fourth switch; T1-first switching transistor; T2-second switching transistor; T3-third switching transistor; T4-fourth switching transistor; T5-fifth switching transistor; and T6-sixth switching transistor.

### DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

Terms such as "first" and "second" are used in the present disclosure to distinguish an element from another element, and are not of sequence or importance. Furthermore, in the following descriptions, when the drawings are referred to, unless otherwise explained, same drawing numerals in different drawings represent same or similar elements.

With the continuous development of vehicle technologies, battery packs have developed more rapidly as a power supply element of new energy vehicles. An operating characteristic of a battery pack is greatly affected by an ambient temperature, and a capacity of the battery pack is low in a low-temperature environment. Therefore, the battery pack needs to be heated at a low temperature to maintain a normal operating state.

In the related art, a battery self-heating technology is usually applied to a battery pack for self-heating. The battery self-heating technology uses circulative charging and discharging of a battery, and relies on the internal resistance of the battery to generate heat. The battery self-heating technology has advantages of fast heating speed, high heating efficiency, good temperature uniformity, and low costs, but also increases noise interference during self-heating.

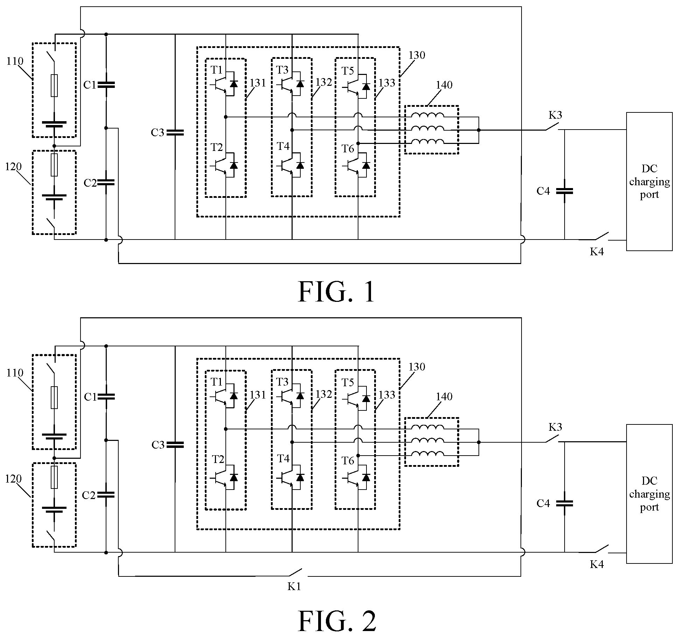

An embodiment of the present disclosure provides a battery self-heating circuit. As shown in FIG. 1, the battery self-heating circuit includes a first battery group 110, a second battery group 120, a first capacitor C1, a second capacitor C2, multiple phase bridge arms 130, and multiple phase windings 140 in one-to-one correspondence with the multiple phase bridge arms 130. Each phase winding is connected to a midpoint of a corresponding bridge arm.

A negative electrode of the first battery group 110 is connected to a positive electrode of the second battery group 120, and the negative electrode of the first battery group 110 and the positive electrode of the second battery group 120 are connected to a neutral point of the multiple phase windings 140. A positive electrode of the first battery group 110 is connected to a first bus end of the multiple phase bridge arms 130, and a negative electrode of the second battery group 120 is connected to a second bus end of the multiple phase bridge arms 130.

A first end of the second capacitor C2 is connected to a second end of the first capacitor C1, the first end of the second capacitor C2 and the second end of the first capacitor C1 is connected to a neutral point of the multiple phase windings 140, a second end of the second capacitor C2 is connected to the negative electrode of the second battery group 120, and a first end of the first capacitor C1 is connected to the positive electrode of the first battery group 110.

The first battery group 110 and the second battery group 120 belong to a same battery pack. A switching transistor in the multiple phase bridge arms 130 is controlled to switch between a closed state and an open state, so that the first battery group 110 discharges to charge the multiple phase windings 140, the multiple phase windings 140 discharge to charge the first battery group 110, the second battery group 120 discharges to charge the multiple phase windings 140, and the multiple phase windings 140 discharge to charge the second battery group 120. The first battery group 110 and the multiple phase windings 140 cooperate to charge and discharge each other, and the second battery group 120 and the multiple phase windings 140 cooperate to charge and discharge each other, thereby implementing self-heating of the first battery group 110 and the second battery group 120.

In a process where the first battery group 110 discharges to charge the multiple phase windings 140, an upper bridge arm of the multiple phase bridge arms 130 is turned on, and a lower bridge arm is turned off. A charging current flows from the positive electrode of the first battery group 110, charges the multiple phase windings 140 through the upper bridge arm of the multiple phase bridge arms 130, and then returns to the negative electrode of the first battery group 110 through the neutral point of the multiple phase windings 140.

In a process where the multiple phase windings 140 discharge to charge the second battery group 120, the lower bridge arm of the multiple phase bridge arms 130 is turned on, and the upper bridge arm is turned off. A charging current flows from the multiple phase windings 140, passes through the neutral point of the multiple phase windings 140 to the positive electrode of the second battery group 120, charges the second battery group 120, and then passes through the negative electrode of the second battery group 120 and the lower bridge arm of the multiple phase bridge arms 130 to return to the multiple phase windings 140.

In a process where the second battery group 120 discharges to charge the multiple phase windings 140, the lower bridge arm of the multiple phase bridge arms 130 is turned on, and the upper bridge arm is turned off. A charging current flows from the positive electrode of the second battery group 120, passes through the neutral point of the multiple phase windings 140 to charge the multiple phase windings 140, and then returns to the negative electrode of the second battery group 120 through the lower bridge arm of the multiple phase bridge arms 130.

In a process where the multiple phase windings 140 discharge to charge the first battery group 110, the upper bridge arm of the multiple phase bridge arms 130 is turned on, and the lower bridge arm is turned off. A charging current flows from the multiple phase windings 140, passes through the upper bridge arm of the multiple phase bridge arms 130 to the positive electrode of the first battery group 110, charges the first battery group 110, and then passes through the negative electrode of the first battery group 110 and the neutral point of the multiple phase windings 140 to return to the multiple phase windings 140.

The multiple phase bridge arms 130 and the multiple phase windings 140 connected to the multiple phase bridge arms 130 in one-to-one correspondence are considered as one connection unit. During charging and discharging of the first battery group 110, the connection unit, the first battery group 110, and the first capacitor C1 are in a parallel relationship. The first capacitor C1 performs filtering during the charging and discharging of the first battery group 110, to implement noise reduction during the charging and discharging of the first battery group 110. During charging and discharging of the second battery group 120, the connection unit, the second battery group 120, and the second capacitor C2 are in a parallel relationship. The second capacitor C2 performs filtering during the charging and discharging of the second battery group 120, to implement noise reduction during the charging and discharging of the second battery group 120.

Through the foregoing technical solution, the first battery group 110 and the multiple phase windings 140 cooperate to charge and discharge to implement self-heating of the first battery group 110. Because the first end of the first capacitor C1 is connected to the positive electrode of the first battery group 110, and the second end of the first capacitor C1 is connected to the neutral point of the multiple phase windings 140, which is equivalent to that the first capacitor C1 is connected in parallel with the first battery group 110, the first capacitor C1 can perform filtering and noise reduction during the self-heating of the first battery group 110. The second battery group 120 and the multiple phase windings cooperate to charge and discharge to implement self-heating of the second battery group 120. Because the first end of the second capacitor C2 is connected to the neutral point of the multiple phase windings 140, and the second end of the second capacitor C2 is connected to the negative electrode of the second battery group 120, which is equivalent to that the second capacitor C2 is connected in parallel with the second battery group 120, the second capacitor C2 can perform filtering and noise reduction during the self-heating of the second battery group 120. In this way, noise reduction of self-heating of the battery pack is implemented.

In an implementation, as shown in FIG. 2, the battery self-heating circuit further includes a first switch K1, where the first end of the second capacitor C2 and the second end of the first capacitor C1 are connected to the neutral point of the multiple phase windings 140 through the first switch K1.

It may be understood that, a connection point between the first end of the second capacitor C2 and the second end of the first capacitor C1 is connected to the neutral point of the multiple phase windings 140 through the first switch K1. The first switch K1 is configured to control access of the first capacitor C1 and the second capacitor C2, that is, determine whether a noise reduction function is enabled. When the first switch K1 is turned on, the first end of the second capacitor C2 and the second end of the first capacitor C1 are connected to the neutral point of the multiple phase windings 140, and noise reduction may be performed during self-heating of the battery pack. When the first switch K1 is turned off, the first end of the second capacitor C2 and the second end of the first capacitor C1 are disconnected from the neutral point of the multiple phase windings 140, and noise reduction cannot be performed during the self-heating of the battery pack.

In other words, whether the noise reduction function is enabled may be controlled through the first switch K1, so that noise reduction may be performed during the self-heating of the battery pack, and not be performed at other times, thereby implementing start-stop control of the noise reduction function.

### In an implementation, the first switch K1 is a contactor.

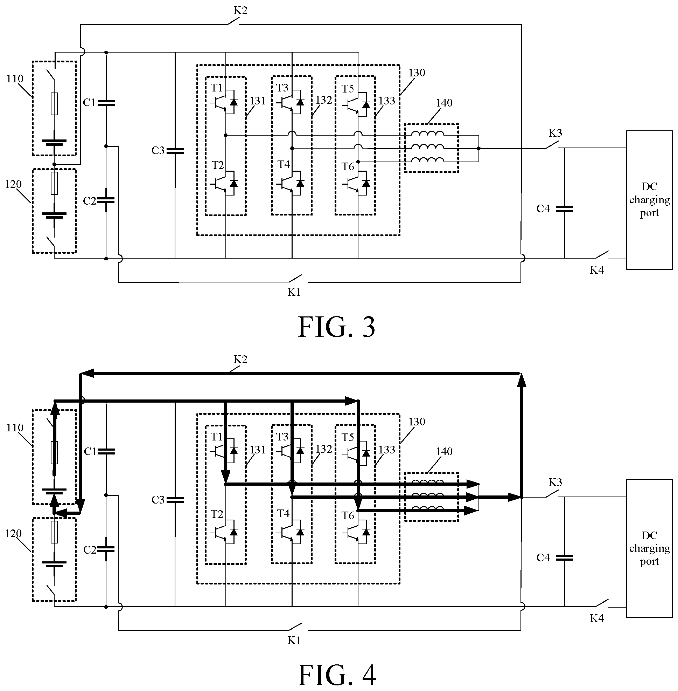

In an implementation, as shown in FIG. 3, the battery self-heating circuit further includes a second switch K2, the negative electrode of the first battery group 110 and the positive electrode of the second battery group 120 are connected to the neutral point of the multiple phase windings 140 through the second switch K2.

It may be understood that, a connection point between the negative electrode of the first battery group 110 and the positive electrode of the second battery group 120 is connected to the neutral point of the multiple phase windings 140 through the second switch K2. The second switch K2 is configured to control access of the first battery group 110 and the second battery group 120, that is, to determine whether self-heating is enabled. When the second switch K2 is turned on, the negative electrode of the first battery group 110 and the positive electrode of the second battery group 120 are connected to the neutral point of the multiple phase windings 140, and the battery pack can perform self-heating. When the second switch K2 is turned off, the negative electrode of the first battery group 110 and the positive electrode of the second battery group 120 are disconnected from the neutral point of the multiple phase windings 140, and the battery pack cannot perform self-heating.

In other words, whether self-heating is enabled may be controlled through the second switch K2. When the battery pack needs self-heating, the second switch K2 is turned on, and a circuit is conducted; and when the battery pack does not need self-heating, the second switch K2 is turned off, thereby implementing start-stop control of the self-heating function, and further ensuring safety of the vehicle and the battery pack.

### Specifically, the second switch K2 may be a contactor.

In an implementation, the multiple phase bridge arms 130 may be three phase bridge arms, and the multiple phase windings 140 may be three phase windings.

The multiple phase bridge arms 130 are three phase bridge arms, and may specifically include a first bridge arm 131, a second bridge arm 132, and a third bridge arm 133. The multiple phase windings 140 are three phase windings, and may specifically include a first phase winding, a second phase winding, and a third phase winding. The first bridge arm 131 is connected to the first phase winding, the second bridge arm 132 is connected to the second phase winding, and the third bridge arm 133 is connected to the third phase winding.

The first bridge arm 131 includes a first switching transistor T1 and a second switching transistor T2, the second bridge arm 132 includes a third switching transistor T3 and a fourth switching transistor T4, and the third bridge arm 133 includes a fifth switching transistor T5 and a sixth switching transistor T6. The first switching transistor T1, the third switching transistor T3, and the fifth switching transistor T5 form the upper bridge arm of the multiple phase bridge arms 130, and the second switching transistor T2, the fourth switching transistor T4, and the sixth switching transistor T6 form the lower bridge arm of the multiple phase bridge arms 130.

Drains of the first switching transistor T1, the third switching transistor T3, and the fifth switching transistor T5 are all connected to the first bus end, and sources of the second switching transistor T2, the fourth switching transistor T4, and the sixth switching transistor T6 are all connected to the second bus end. The source of the first switching transistor T1 is connected to the drain of the second switching transistor T2, and the source of the first switching transistor T1 and the drain of the second switching transistor T2 are connected to the first phase winding; the source of the third switching transistor T3 is connected to the drain of the second switching transistor T2, and the source of the third switching transistor T3 and the drain of the second switching transistor T2 are connected to the second phase winding; and the source of the fifth switching transistor T5 is connected to the drain of the sixth switching transistor T6, and the source of the fifth switching transistor T5 and the drain of the sixth switching transistor T6 are connected to the third phase winding.

In other embodiments of the present disclosure, the multiple phase bridge arms 130 may be six phase bridge arms, and the multiple phase windings 140 may be six phase windings.

In an implementation, multiple phase coils of a motor are reused as the multiple phase windings 140, and multiple phase bridge arms of a motor controller are reused as the multiple phase bridge arms 130.

Specifically, the motor includes a drive motor or an air conditioner compressor, and the motor controller includes a motor controller corresponding to the drive motor or a motor controller corresponding to the air conditioner compressor.

In other words, the battery self-heating circuit may share the multiple phase windings 140 and the multiple phase bridge arms 130 with the existing motor and motor controller on the vehicle without addition, thereby saving space and resources.

In other embodiments of the present disclosure, the multiple phase bridge arms 130 may alternatively be multiple phase bridge arms 130 in an inverter on the vehicle, and the multiple phase windings 140 may be multiple phase windings 140 in a motor on the vehicle.

In an implementation, the battery self-heating circuit further includes a DC charging port. The neutral point of the multiple phase windings 140 is connected to a positive electrode of the DC charging port, and the second bus end of the multiple phase bridge arms 130 is connected to a negative electrode of the DC charging port. The multiple phase windings 140 and the multiple phase bridge arms 130 form a boost circuit. The boost circuit is configured to boost a direct current of the DC charging port to charge the first battery group 110 and the second battery group 120.

An external charging device may charge the battery pack through the DC charging port. The external charging device may be, but is not limited to, a charging connector, a charging pile, another vehicle, or the like.

The battery pack may alternatively supply power to another electrical device through the DC charging port. Another electrical device may be, but is not limited to, a mobile phone, an audio speaker, another vehicle, or the like.

In other words, interaction between the battery self-heating circuit and the outside may be implemented through the DC charging port, which increases applicable scenarios of the battery self-heating circuit, and improves applicability of the battery self-heating circuit.

In other embodiments of the present disclosure, the battery self-heating circuit may further include a third capacitor C3, a fourth capacitor C4, a third switch K3, and a fourth switch K4. A first end of the third capacitor C3 is connected to the positive electrode of the first battery group 110, and a second end of the third capacitor C3 is connected to the negative electrode of the second battery group 120. A first end of the fourth capacitor C4 is connected to the positive electrode of the DC charging port, and a second end of the fourth capacitor C4 is connected to the negative electrode of the DC charging port through the fourth switch K4. The third switch K3 is connected between the neutral point of the multiple phase windings 140 and the positive electrode of the DC charging port. The fourth switch K4 is connected between the negative electrode of the second battery group 120 and the negative electrode of the DC charging port.

The third switch K3 is configured to control connection of the fourth capacitor C4. If the third switch K3 is turned on, the fourth capacitor C4 is connected, or if the third switch K3 is turned off, the fourth capacitor C4 is not connected. On this basis, the fourth switch K4 is configured to control connection of the DC charging port. If the fourth switch K4 is turned on, the DC charging port is connected, or if the fourth switch K4 is turned off, the DC charging port is not connected, so that interaction of the battery self-heating circuit with the outside is controlled.

In an implementation, a capacitance of the first capacitor C1 is the same as a capacitance of the second capacitor C2.

In a timing sequence 1, the first battery group 110 discharges to charge the multiple phase windings 140, and the first capacitor C1 operates. In a timing sequence 2, the multiple phase windings 140 discharge to charge the second battery group 120, and the second capacitor C2 operates. In a timing sequence 3, the second battery group 120 discharges to charge the multiple phase windings 140, and the second capacitor C2 operates. In a timing sequence 4, the multiple phase windings 140 discharge to charge the first battery group 110, and the first capacitor C1 operates.

The capacitance of the first capacitor C1 and the capacitance of the second capacitor C2 are the same, and a noise reduction capability of the first capacitor C1 and a noise reduction capability of the second capacitor C2 are the same. A noise reduction effect of the first capacitor C1 during the charging and discharging of the first battery group 110 is the same as a noise reduction effect of the second capacitor C2 during the charging and discharging of the second battery group 120. In this way, a noise reduction effect in a self-heating process of the battery pack is stable.

In an implementation, the capacitance of the first capacitor C1 and the capacitance of the second capacitor C2 are both less than 10 µF.

The capacitance of the first capacitor C1 is less than 10 µF, and the capacitance of the second capacitor C2 is less than 10 µF. If the capacitances of the first capacitor C1 and the second capacitor C2 are excessively large, a self-heating current is affected.

The three phase bridge arms and the three phase windings are used as an example to describe the working principle of the battery self-heating circuit:

Timing sequence 1: The first switching transistor T1, the third switching transistor T3, and the fifth switching transistor T5 are turned on, and the second switching transistor T2, the fourth switching transistor T4, and the sixth switching transistor T6 are turned off. As shown in FIG. 4, a charging current flows from the positive electrode of the first battery group 110, charges the three phase windings through the first switching transistor T1, the third switching transistor T3, and the fifth switching transistor T5, and then returns to the negative electrode of the first battery group 110 through the neutral point of the three-phase winding. The first capacitor C1 is connected in parallel to the first battery group 110.

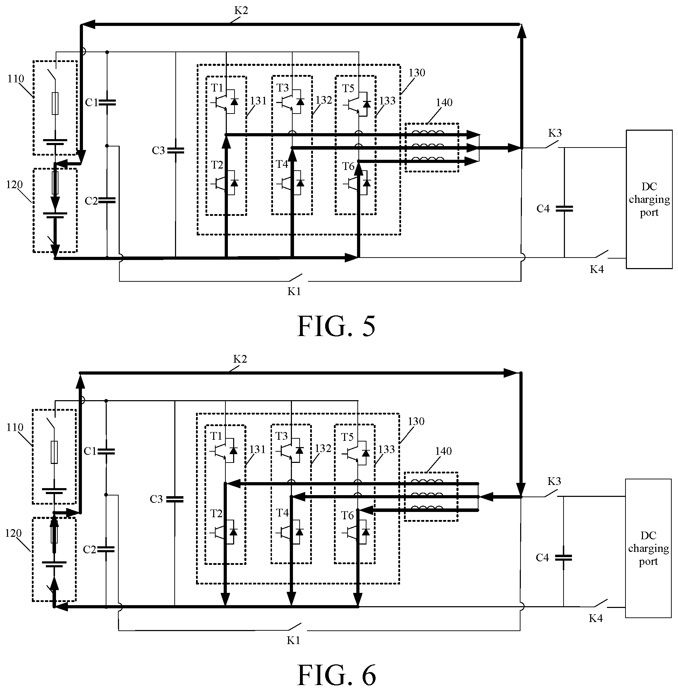

Timing sequence 2: The first switching transistor T1, the third switching transistor T3, and the fifth switching transistor T5 are turned off, and the second switching transistor T2, the fourth switching transistor T4, and the sixth switching transistor T6 are turned on. As shown in FIG. 5, a charging current flows from the three phase windings, passes through the neutral point of the three phase windings to the positive electrode of the second battery group 120, to charge the second battery group 120, and then returns from the negative electrode of the second battery group 120 to the three phase windings through the second switching transistor T2, the fourth switching transistor T4, and the sixth switching transistor T6. The second capacitor C2 is connected in parallel to the second battery group 120.

Through switching between the timing sequence 1 and the timing sequence 2, discharging of the first battery group 110 and charging of the second battery group 120 are implemented.

Timing sequence 3: The first switching transistor T1, the third switching transistor T3, and the fifth switching transistor T5 are turned off, and the second switching transistor T2, the fourth switching transistor T4, and the sixth switching transistor T6 are turned on. As shown in FIG. 6, a charging current flows from the positive electrode of the second battery group 120, charges the three phase windings through the neutral point of the three phase windings, and then returns to the negative electrode of the second battery group 120 through the second switching transistor T2, the fourth switching transistor T4, and the sixth switching transistor T6. The second capacitor C2 is connected in parallel to the second battery group 120.

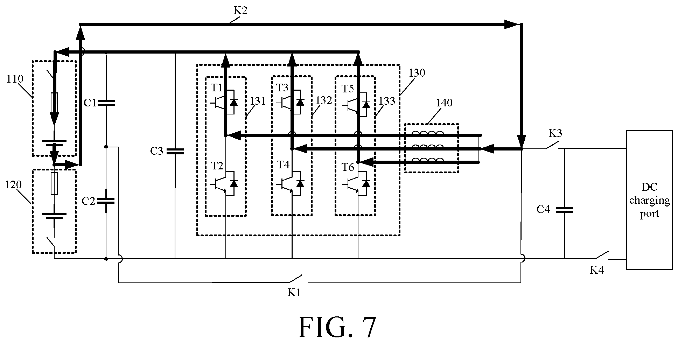

Timing sequence 4: The first switching transistor T1, the third switching transistor T3, and the fifth switching transistor T5 are turned on, and the second switching transistor T2, the fourth switching transistor T4, and the sixth switching transistor T6 are turned off. As shown in FIG. 7, a charging current flows from the three phase windings, passes through the first switching transistor T1, the third switching transistor T3, and the fifth switching transistor T5, to the positive electrode of the first battery group 110, charges the first battery group 110, and then returns from the negative electrode of the first battery group 110 to the three phase windings through the neutral point of the three phase windings. The first capacitor C1 is connected in parallel to the first battery group 110.

Through switching between the timing sequence 3 and the timing sequence 4, charging of the first battery group 110 and discharging of the second battery group 120 are implemented.

Through switching between the timing sequences 1 and 2 and between the timing sequences 3 and 4, the charging and discharging of the first battery group 110 and the second battery group 120 are implemented.

An embodiment of the present disclosure further provides a vehicle, and the vehicle includes the battery self-heating circuit provided in the foregoing embodiments.

The exemplary embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A battery self-heating circuit, comprising a first battery group (110), a second battery group (120), a first capacitor (C1), a second capacitor (C2), multiple phase bridge arms (130), and multiple phase windings (140) in one-to-one correspondence with the multiple phase bridge arms (130), wherein each phase winding is connected to a midpoint of a corresponding bridge arm;
a negative electrode of the first battery group (110) being connected to a positive electrode of the second battery group (120), and the negative electrode of the first battery group (110) and the positive electrode of the second battery group (120) being connected to a neutral point of the multiple phase windings (140);
a positive electrode of the first battery group (110) being connected to a first bus end of the multiple phase bridge arms (130), and a negative electrode of the second battery group (120) being connected to a second bus end of the multiple phase bridge arms (130); and
a first end of the second capacitor (C2) being connected to a second end of the first capacitor (C1), the first end of the second capacitor (C2) and the second end of the first capacitor (C1) being connected to the neutral point of the multiple phase windings (140), a second end of the second capacitor (C2) being connected to the negative electrode of the second battery group (120), and a first end of the first capacitor (C1) being connected to the positive electrode of the first battery group (110).

2. The battery self-heating circuit according to claim 1, further comprising a first switch (K1), the first end of the second capacitor (C2) and the second end of the first capacitor (C1) being connected to the neutral point of the multiple phase windings (140) through the first switch (K1).

3. The battery self-heating circuit according to claim 2, wherein the first switch (K1) is a contactor.

4. The battery self-heating circuit according to any one of claims 1 to 3, further comprising a second switch (K2), the negative electrode of the first battery group (110) and the positive electrode of the second battery group (120) being connected to the neutral point of the multiple phase windings (140) through the second switch (K2).

5. The battery self-heating circuit according to any one of claims 1 to 4, wherein multiple phase coils of a motor are reused as the multiple phase windings (140), and multiple phase bridge arms (130) of a motor controller are reused as the multiple phase bridge arms (130).

6. The battery self-heating circuit according to claim 5, wherein the motor comprises a drive motor or an air conditioner compressor, and the motor controller comprises a motor controller corresponding to the drive motor or a motor controller corresponding to the air conditioner compressor.

7. The battery self-heating circuit according to any one of claims 1 to 6, further comprising a DC charging port, the neutral point of the multiple phase windings (140) being connected to a positive electrode of the DC charging port, and the second bus end of the multiple phase bridge arms (130) being connected to a negative electrode of the DC charging port, the multiple phase windings (140) and the multiple phase bridge arms (130) forming a boost circuit, and the boost circuit being configured to boost a direct current of the DC charging port, and then charge the first battery group (110) and the second battery group (120).

8. The battery self-heating circuit according to any one of claims 1 to 7, wherein a capacitance of the first capacitor (C1) is the same as a capacitance of the second capacitor (C2).

9. The battery self-heating circuit according to any one of claims 1 to 8, wherein the capacitance of the first capacitor (C1) and the capacitance of the second capacitor (C2) are both less than 10 µF.

10. A vehicle, comprising the battery self-heating circuit according to any one of claims 1 to 9.
